# EUROPÄISCHE PATENTSCHRIFT

(11) **EP 2 463 151 B1**
(45) Veröffentlichungstag und Bekanntmachung des Hinweises auf die Patenterteilung: **22.11.2017**
(21) Anmeldenummer: 10194436.1
(22) Anmeldetag: 10.12.2010
(51) Int. Cl.: B60Q 1/26, B60R 1/12, B60R 13/00, F21S 8/10

(54) **Beleuchtungsmodul für ein Fahrzeug**
Lighting module for a vehicle
Module d'éclairage pour véhicule

(43) Veröffentlichungstag der Anmeldung: 13.06.2012
(60) Teilanmeldung: 17159384.1
(73) Patentinhaber: SMR Patents S.à.r.l., 1653 Luxembourg (LU)
(72) Erfinder: Fritz, Daniel, 70186, Stuttgart (DE); Herrmann, Andreas, 71364, Winnenden-Baach (DE); Goldschmidt, Sönke, 71384, Weinstadt (DE)
(74) Vertreter: Weber-Bruls, Dorothée

(56) Entgegenhaltungen:
- EP-A2- 1 176 360
- EP-A2- 1 176 361
- EP-A2- 1 690 736
- WO-A1-2006/079947
- DE-A1- 10 243 373
- DE-A1-102004 024 599
- DE-A1-102005 038 154
- US-A1- 2007 193 085

## Beschreibung

Die Erfindung betrifft ein Beleuchtungsmodul mit den Merkmalen des Oberbegriffs des Anspruchs 1.

Es werden im besonderen Blinker im Außenspiegel betrachtet.

### Stand der Technik

Konventionelle Außenspiegel haben ein Design, das es erlaubt, den Spiegelkopf gegenüber dem Spiegelfuß von Hand oder motorisch in Fahrtrichtung des Fahrzeuges nach hinten abgeklappt werden kann. Zudem lässt sich der Spiegelglasträger im Spiegelkopf in der Regel vom Inneren des Fahrzeuges aus einstellen. Dadurch ist eine einwandfreie Sicht des Fahrers gewährleistet, wodurch eine hohe Verkehrssicherheit erreicht wird. Viele Außenspiegel weisen eine Blinkleuchte auf, die an der in Fahrtrichtung vorderen Seite des Spiegelgehäuses vorgesehen ist. Für neben oder hinter dem Außenspiegel befindliche Verkehrsteilnehmer ist die Blinkleuchte jedoch nicht oder nur ungenügend erkennbar. Daher werden Zusatz- LED s verwenden, die entgegen der Fahrtrichtung abstrahlen und am äußersten Rand des Außenspiegels im Blinker integriert sind, Nach den ECE Regeln soll ein Zusatzblinklicht im Außenspiegel einen Bereich beginnend bei 5° von der Fahrzeuglängsachse bis zu 60 ° zur Fahrzeuglängsachse in Fahrtgegenrichtung ausleuchten.

Aus dem Stand der Technik ist einen Vielzahl an Lösungen für Blinker im Außenspiegel bekannt. Dabei werden Blinkermodule in das Gehäuse eines Außenspiegels integriert. Diese Blinkermodule enthalten je nach Design Lichtwellenleiter, Reflektoren, Leiterplatten, Linsen und Abdeckscheiben und Leuchtmittel. Die Leuchtmittel sind durch die bekannten Vorteile immer mehr LEDs.

Eine gattungsgemäße Beleuchtungseinheit ist bekannt aus DE 10 2005 038 154 A1.

Eine Ausführungsform ist aus der EP 0858932 bekannt. In dieser Ausführungsform wird ein Blinkermodul gebildet, das einen Lichtleiter aufweist. Der Lichtleiter bildet mit dem Gehäuse eines Außenspiegels eine stetige Kontur aus. Das Licht einer LED wird an einem Ende des Lichtleiters eingekoppelt und über die gesamte Länge transportiert. Die Abstrahlung des Lichtes erfolgt über die gesamte Länge des Lichtleiters je nach Dichte der Auskoppelvorrichtungen und am Ende des Lichtleiters. Es erweist sich, dass diese Lösung für die optimale Ausleuchtung einer Beleuchtungseinrichtung nicht ausreicht. Ein man erreicht mit der Lösung der fernen Einkopplung von Licht und dem Transport von 5 bis 20 cm nicht die gewünscht Lichtstärke.

Aus der US 7357549 ist einen Beleuchtungseinheit bekannt, die Lichtleiterelemente aufweist, in die mindestens einen LED ragt. In dieser Ausführung wird er Lichtleiter in mehrere Abschnitte unterteilt und weist ein Aussparung entlang seiner Längenausdehnung auf. Durch die Ausnehmung im Lichtleiter, wird dieser in seiner Stabilität geschwächt und/oder die äußere stetige Oberfläche des Lichtleiters durch einen Erhebung gestört. Dadurch dass das Lichtleitmaterial optisch klar ist, ist der Lichteinkoppelpunkt von außen sichtbar, was den harmonischen Eindruck des Lichtleiters stört.

Es ist Aufgabe der Erfindung ein Blinkermodul zu schaffen, in dem das Licht in mindestens zwei Lichtleitern eingespeist und der Kontaktbereich der Lichtleiter nach außen mit einer Optik verschlossen ist, die einerseits die Einkoppelstelle abdeckt und auf der anderen Seite eine zusätzlichen Mehrwert durch einen dekorativen Eindruck schafft.

Die Aufgabe wird durch ein eingangs genanntes Beleuchtungsmodul durch die Merkmale des kennzeichnenden Teils des Anspruchs 1 gelöst.

### Beschreibung der Erfindung

Die nachfolgenden Figuren und die Beschreibung zeigen Ausführungsformen der Erfindung.
Fig. 1 zeigt eine erste Ausführungsform eines Beleuchtungsmoduls
Fig. 2 zeigt eine zweite Ausführungsform
Fig. 3 bis 5 zeigen Beispiele der Logobeleuchtung
Fig. 6 zeigt eine Befestigungsmöglichkeit
Fig. 7 einen Entkopplung in der Verbindungsoptik

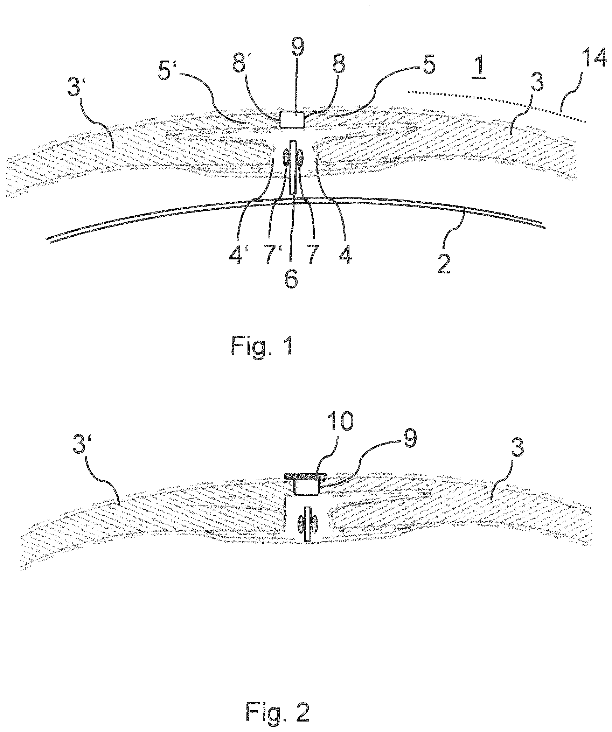

Figur 1 zeigt eine Ausführungsform eines Beleuchtungsmoduls das nicht vollständig dargestellt ist. Das Beleuchtungsmodul 1 besteht aus Lichtleitern 3, 3' sowie einem Gehäuse 2, dessen Rückwand in der Zeichnung dargestellt ist. Die Lichtleiter bilden in einer Ausführungsform die äußere Kontur 16 des Beleuchtungsmoduls oder liegen in einer anderen Ausführungsform - wie hier skizziert- hinter einer Lichtscheibe 14. Sie folgen dabei ebenfalls der Kontur der Lichtscheibe 14. Die Lichtleiter 3 und 3' weisen in der gewählten Ausführungsform zwei Arme auf. Der eine innere Arm des Lichtleiters endet in einer Einkoppelstelle 4 beziehungsweise 4'. Der äußere Arm 5, 5' der Lichtleiter endet stumpf an einer Verbindungsoptik 9. Die Verbindungsoptik 9 sitzt genau zwischen den beiden Endfacetten 8, 8' der beiden Lichtleiter 3 und 3'. Die beiden Arme des Lichtleiters sind in dieser Ausführungsform nicht gleich lang ausgebildet. Vielmehr bilden die inneren Arme mit den Einkoppelstellen 4, 4' einen Raum, in den eine Platine 6, die mit LEDs 7, 7' bestückt ist, hineinragt. Die Verbindungsoptik ist in dieser Ausführungsform ein Quader, der genau in die Ausnehmung der äußeren Arme 5, 5' der Lichtleiter passt. Dieser Quader der Verbindungsoptik deckt die Einkoppelstelle, den Einkoppelraum unterhalb der Verbindungsoptik ab. Um den Einblick auf die Einkoppelstelle und die Platine zu verdecken ist die Verbindungsoptik 9 dabei als opakes Material ausgebildet. Das Licht der LEDs 7 und 7' wird Einkoppelstellen 4, 4' in die Lichtleiter 3, 3' eingekoppelt und zu den jeweiligen Auskoppelpunkten transportiert. Dabei wird Licht über die äußere Kontur 16 der Lichtwellenleiter abgestrahlt, sowie über die Auskoppelstellen, die in diesen Zeichnungen nicht dargestellt sind.

Fig. 2 zeigt eine weitere Ausführungsform der erfindungsgemäßen Verbindungsoptik. Auf der linken Seite des Beleuchtungsmoduls wird ein Lichtwellenleiter 3' dargestellt, der nicht aus zwei Armen besteht. Der Lichtleiter weist eine komplette Struktur auf. Die Verbindungsoptik 9 wird in diesem Ausführungsbeispiel durch eine Informationsoptik 10 ergänzt. Die Informationsoptik 10 besteht dabei beispielsweise aus einem farbigen Material, das die Verbindungsoptik entweder vollständig abdeckt oder aus einem farbigen Material, das die Verbindungsoptik nur mit einem Logo oder einem Zeichen abdeckt. Die Informationsoptik 10 kann auch aus einer opaken Scheibe bestehen. Auch in diesem Ausführungsbeispiel wird das Licht der beiden beispielshaft eingezeichneten LEDs 7 und 7' in Richtung der Lichtwellenleiter abgestrahlt. Es ist aber auch möglich, eine weitere LED vorzusehen, deren Licht durch die Verbindungsoptik strahlt. Besonders bei der Darstellung eines Logos ist eine solche Ausführungsform von Vorteil.

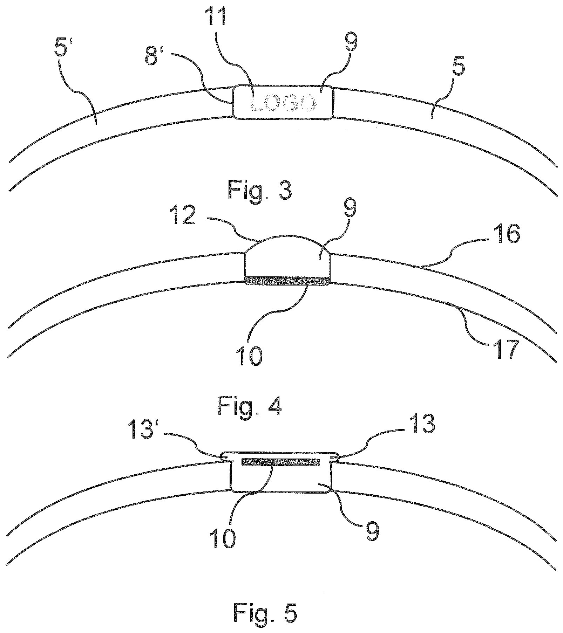

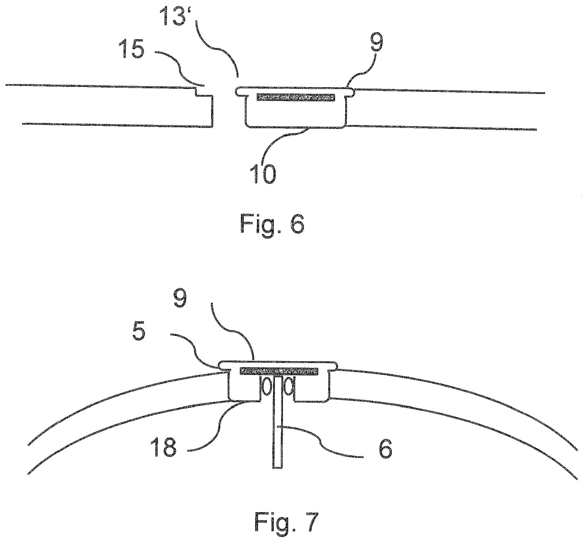

Wie in den Figuren 4 und 5 dargestellt muss die Informationsoptik 10 nicht zwingend auf der äußeren Kontur 6 des Lichtleiters angebracht sein. Die Informationsoptik 10 ist in der Ausführungsform der Figur 4 auf der Seite der inneren Kontur des Lichtwellenleiters vorgesehen. In der Ausführungsform nach Figur 4 weist die Verbindungsoptik zudem eine konvexe Oberfläche an ihrer Außenseite auf. Dadurch wird eine Linsenstruktur gebildet, die eine saubere Abbildung des Logos, das sich in der Informationsoptik 10 befindet, ermöglicht. Die Ausleuchtung des Logos, das sich in der Informationsoptik 10 befindet erfolgt dabei direkt über die Lichtwellenleiter 5, 5'. Das Zeichen oder Logo der Informationsoptik muss nicht zwingend von hinten durchstrahlt werden. In der Ausführungsform der Figur 5 ist die Informationsoptik in die Verbindungsoptik eingebettet. Für alle Ausführungsformen ist es möglich, die Außenseite jeweils als konvexe Linse auszubilden. Die Ausführungsform nach Figur 5 zeigt noch eine weitere spezielle Ausbildung. Die Verbindungsoptik 9 weist an ihrer Außenseite überkragende Ränder 13, 13' auf. Diese Ränder überkragen die Lichtleiter 5,5'. Die überkragenden Ränder 13 und 13' dienen dabei zu Befestigung der Verbindungsoptik 9 an den Lichtleitern 5, 5'. Es ist, wie in Figur 6 dargestellt, auch möglich die überkragenden Ränder direkt in die Aufnahmen 15 des Lichtwellenleiters einzubringen und so eine bündige Oberfläche herzustellen.
Die Befestigungsmittel umfassen dabei alle Mittel, die zum Kleben, zum Ultraschallschweißen, Reibschweißen sowie anderen Formen des Heißverbindens eingesetzt werden. Die Befestigungsmittel sind dabei auch als Flächen zu verstehen, die für das Verkleben geeignet sind.

Eine spezielle Ausführungsform, die nicht Teil der Erfindung ist, ist in Figur 3 dargestellt. In dieser Ausführungsform wird in die Verbindungsoptik 9 ein Zeichen 11 eingeschrieben. Dabei wird ein spezieller Kunststoff verwendet, so dass ein Zeichen über einen Laser eingeschrieben werden kann.
Kunststoffe absorbieren im Bereich des nahen ultravioletten bis nahen infraroten Lichtes keine Laserstrahlung. Eine Umsetzung der Laserenergie in Wärme ist deshalb nur möglich, wenn das Polymer durch Zusatz eines Additivs entsprechend "lasersensibilisiert" wurde. Ohne Laseradditiv können Kunststoffe deshalb nur im fernen ultravioletten Licht, z.B. mit Excimer-Lasern und im fernen infraroten Licht, z.B. mit CO2-Lasern bearbeitet werden
In handelsübliches Acrylglas können zwar 3D-Motive wie Logos laserinnengraviert werden, jedoch sind Auflösung und Brillanz deutlich schlechter als in Silikatglas. Die geringe Qualität der Innengravur hat den Einsatz von Acrylglas zum Laserinnengravieren bisher verhindert. Durch Einsatz von Spezialkunststoffen bzw. Additiven ist es gelungen, 3D-Motive mit hoher Qualität laserinnengraviert herzustellen. Dies wird beispielsweise durch Nanomodifizierung der hochtransparenten Kunststoffe erreicht. Die für die Nanomodifizierung erforderliche Verteilung ist die Grundvoraussetzung, um die hohe Transparenz des Kunststoffs zu erhalten und um ein Bild mit hoher Auflösung und Brillanz zu erzeugen.
In nanomodifiziertem Acrylglas wird eine sehr hohe Auflösung erzielt. Während bei der Laserinnengravur in nicht modifiziertem Acrylglas optisch und mechanisch störende Mikrorisse entstehen, werden in dem nanomodifiziertem Acrylglas hingegen definierte "Punkte" erzeugt. Die Möglichkeit, hoch auflösende 3D-Motive in Bauteile zu gravieren, besteht nicht nur bei Acrylglas, sondern kann auch bei anderen hochtransparenten Werkstoffen wie in teilkristallinem Polyamid genutzt werden. Das Objekt aus der CAD-Datei muss in eine sogenannte Punktwolke (dot cloud) umgewandelt werden. Jeder Punkt wird dabei mit seinen x-, y- und z-Richtungskoordinaten berechnet und gespeichert. Der 3D-Laser kann, im Gegensatz zum normalen Schreiblaser, nur einzelne Punkte, aber mit einer sehr hohen Geschwindigkeit einschreiben.
Jeder einzelne Punkt wird dann über einen hochfokussierten, frequenzverdoppelten Nd:YAG-Laser (532 nm) in das transparente Polymer eingraviert. Beim PMMA werden in diesem Prozess winzigste Bläschen erzeugt, während es beim PA zu einer Karbonisierung (Schwärzung) des Kunststoffes kommt.
Der Laserstrahl wird von zwei computergesteuerten Galvanometerspiegeln in x-, y-, und z-Richtung abgelenkt und mit einer (vorzugsweise Planfeld-) Linse auf das zu beschriftende Teil fokussiert.

In all den Ausführungsformen nach Figur 3 - 6 wird das Licht der LEDs direkt in den Lichtwellenleiter 5, 5' eingekoppelt.

In Figur 7 findet sich eine Ausführungsform, in der das Licht direkt in die Verbindungsoptik eingekoppelt wird. Die Verbindungsoptik 9 weist dafür eine Ausnehmung 18 auf, in die die Platine 6 mit den darauf montierten LEDs hineinragt. Um die Verbindungsoptik zwischen den Lichtleiterabschnitten zusammen zu bauen, sind Mittel zur Verbindung vorgesehen. Dabei kommen verschiedene Verbindungsmöglichkeiten zum Einsatz. Eine einfache Verbindung erfolgt über das Verkleben der Verbindungsoptik mit den Lichtleitern. Möchte man allerdings Licht aus den Lichtwellenleitern in die Verbindungsoptik einkoppeln, müssen die Klebestellen der Endfacetten der Lichtleiter zu der Verbindungsoptik optisch transparent sein. Es ist auch möglich, die Verbindungsoptik 9 zwischen die Lichtleiterabschnitte einzupressen oder sie über Reibschweissen mit den Lichtleitern zu verbinden. Jede Art von Clipsverbindung ist ebenfalls denkbar. Dabei kann die Verbindungsoptik von der Außenseiten der Außenkontur 16 zwischen die Lichtleiter geschoben und dort verklipst werden. Mit der Ausführungsform von Figur 7 ist noch ein weiterer Vorteil verbunden. Die Verbindungsoptik 9 wird dabei mit der Platine 6, den LEDs 7 und der Informationsoptik 10 zu einem gemeinsamen selbstständigen Modul integriert. Dadurch können Lichtleiterabschnitte miteinander verbunden werden, in dem man die Verbindungsoptik von außen zwischen die Öffnung der Lichtleiter einsteckt. Die Kontaktierung der Platine erfolgt dabei über Stecker oder Drahtverbindungen an der Rückseite des Beleuchtungsgehäuses.

Die gezeigten Ausführungsformen kommen vorzugsweise als Blinkermodul in einem Außenspiegel eines Fahrzeugs zum Einsatz. Die Beleuchtungseinheit kann aber auch an anderen Stellen des Fahrzeugs eingesetzt werden.

### Legende

- 1: Beleuchtungsmodul
- 2: Gehäuserückwand
- 3: Lichtleiter
- 4: Einkoppelstelle
- 5: Lichtleiterarm
- 6: Platine
- 7: LED
- 8: Endfacette Lichtleiter
- 9: Verbindungsoptik
- 10: Informationsoptik
- 11: Eingeschriebenes Zeichen
- 12: Linse
- 13: überkragender Rand
- 14: Lichtscheibe
- 15: Aufnahme
- 16: Außenkontur
- 17: Innenkontur
- 18: Ausnehmung in der Verbindungsoptik

## Patentansprüche

1. Beleuchtungsmodul für ein Fahrzeug, bestehend aus einem Gehäuse (2) und mindestens zwei Lichtleitern (3,3'), die im Gehäuse angeordnet sind und sich der Außenkontur (16) des Beleuchtungsmoduls entlang erstrecken, mit mindestens zwei LEDs (7,7'), die auf mindestens einer Platine (6) im Gehäuse angeordnet sind, wobei das Licht der mindestens zwei LEDs (7,7') in die mindestens zwei Lichtleiter (3, 3') eingekoppelt wird, **dadurch gekennzeichnet, dass** sich zwischen den Lichtleitern (3,3') eine opake Verbindungsoptik (9) befindet, die zwischen zwei Endfacetten (8, 8') der mindestens zwei Lichtleiter (3,3') mit einer Informationsoptik (10) genau sitzt, um den Einblick auf die Einkoppelstellen zu verdecken, und die der Außenkontur der Lichtleiter angepasst ist.

2. Beleuchtungsmodul nach Anspruch 1, **dadurch gekennzeichnet, dass** die Lichtleiter die äußere Abdeckung des Gehäuses des Beleuchtungskörpers bilden.

3. Beleuchtungsmodul nach Anspruch 1, **dadurch gekennzeichnet, dass** die Lichtleiter innerhalb einer weiteren äußeren Abdeckung (14) des Gehäuses des Beleuchtungskörpers liegen.

4. Beleuchtungsmodul nach Anspruch 1, **dadurch gekennzeichnet, dass** die Lichtleiterabschnitte stumpf an der Verbindungsoptik (9) enden.

5. Beleuchtungsmodul nach Anspruch 1, **dadurch gekennzeichnet, dass** die Verbindungsoptik aus demselben Kunststoffmaterial wie die Lichtleiter gefertigt ist.

6. Beleuchtungsmodul nach Anspruch 1, **dadurch gekennzeichnet, dass** die Verbindungsoptik aus zum Lichtleiter verschiedenen Kunststoffmaterialien gefertigt ist.

7. Beleuchtungsmodul nach Anspruch 1, **dadurch gekennzeichnet, dass** die Verbindungsoptik auf ihrer äußeren Oberflache die Informationsoptik (10) aufweist.

8. Beleuchtungsmodul nach Anspruch 1, **dadurch gekennzeichnet, dass** die Verbindungsoptik auf ihrer inneren Oberflache die Informationsoptik (10) aufweist.

9. Beleuchtungsmodul nach Anspruch 1, **dadurch gekennzeichnet, dass** die Verbindungsoptik in ihrem Inneren die Informationsoptik (10) aufweist.

10. Beleuchtungsmodul nach Anspruch 1, **dadurch gekennzeichnet, dass** die Verbindungsoptik auf ihrer äußeren Oberflache eine Linsenform aufweist.

11. Beleuchtungsmodul nach Anspruch 1, **dadurch gekennzeichnet, dass** die Verbindungsoptik an einer ihrer Außenseiten einen über die Lichtleiter ragenden Rand (13, 13') aufweist.

12. Beleuchtungsmodul nach Anspruch 1, **dadurch gekennzeichnet, dass** die Verbindungsoptik Mittel zur Befestigung an den Lichtleitern aufweist

13. Beleuchtungsmodul nach Anspruch 12, **dadurch gekennzeichnet, dass** die Mittel aus Klipsen bestehen.

14. Beleuchtungsmodul nach Anspruch 1, **dadurch gekennzeichnet, dass** die Lichtleiter Befestigungsmittel für die Verbindung mit der Verbindungsoptik aufweisen.

## Claims

1. Lighting module for a vehicle, consisting of a housing (2) and at least two light conductors (3, 3') arranged in the housing and extending along the outer contour (16) of the lighting module, having at least two LEDs (7, 7') arranged on at least one board (6) in the housing, wherein the light of the at least two LEDs (7, 7') is coupled into the at least two light conductors (3, 3'), **characterised in that** an opaque connection optic (9) is situated between the light conductors (3, 3') which sits exactly between two end facets (8, 8') of the at least two light conductors (3, 3') with an information optic (10) in order to cover the view of the coupling points and which is adapted to the outer contour of the light conductors.

2. Lighting module according to claim 1, **characterised in that** the light conductors form the outer cover of the housing of the lighting module.

3. Lighting module according to claim 1, **characterised in that** the light conductors lie inside a further outer cover (14) of the housing of the lighting module.

4. Lighting module according to claim 1, **characterised in that** the light conductor sections have a blunt end at the connection optic (9).

5. Lighting module according to claim 1, **characterised in that** the connection optic is made of the same plastic material as the light conductors.

6. Lighting module according to claim 1, **characterised in that** the connection optic is made of different plastic materials than the light conductors.

7. Lighting module according to claim 1, **characterised in that** the connection optic has the information optic (10) on its outer surface.

8. Lighting module according to claim 1, **characterised in that** the connection optic has the information optic (10) on its inner surface.

9. Lighting module according to claim 1, **characterised in that** the connection optic has the information optic (10) in its interior.

10. Lighting module according to claim 1, **characterised in that** the connection optic has a lens shape on its outer surface.

11. Lighting module according to claim 1, **characterised in that** the connection optic has, on one of its outer sides, an edge (13, 13') projecting over the light conductors.

12. Lighting module according to claim 1, **characterised in that** the connection optic has means for attachment to the light conductors.

13. Lighting module according to claim 12, **characterised in that** the means consist of clips.

14. Lighting module according to claim 1, **characterised in that** the light conductors have attachment means for the connection to the connection optic.

## Revendications

1. Module d'éclairage pour un véhicule, constitué d'un boîtier (2) et d'au moins deux guides d'ondes optiques (3, 3'), qui sont agencés dans le boîtier et s'étendent le long du contour externe (16) du module d'éclairage, avec au moins deux DEL (7, 7'), qui sont agencées sur au moins une platine (6) dans le boîtier, dans lequel la lumière des au moins deux DEL (7,7') est injectée dans les au moins deux guides d'ondes optiques (3,3'), **caractérisé en ce qu'**entre les guides d'ondes optiques (3, 3') se trouve une optique de liaison opaque (9) qui est imbriquée de manière précise entre deux facettes d'extrémité (8, 8') des au moins deux guides d'ondes optiques (3,3') avec une optique d'information (10) pour dissimuler les points d'injection au regard et qui est adaptée au contour externe des guides d'ondes optiques.

2. Module d'éclairage selon la revendication 1, **caractérisé en ce que** les guides d'ondes optiques forment le recouvrement externe du boîtier du corps d'éclairage.

3. Module d'éclairage selon la revendication 1, **caractérisé en ce que** les guides d'ondes optiques se situent à l'intérieur d'un autre recouvrement externe (14) du boîtier du corps d'éclairage.

4. Module d'éclairage selon la revendication 1, **caractérisé en ce que** les sections de guides d'ondes optiques se terminent en cône tronqué sur l'optique de liaison (9).

5. Module d'éclairage selon la revendication 1, **caractérisé en ce que** l'optique de liaison est formée du même matériau synthétique que les guides d'ondes optiques.

6. Module d'éclairage selon la revendication 1, **caractérisé en ce que** l'optique de liaison est formée de matériaux synthétiques différents de ceux des guides d'ondes optiques.

7. Module d'éclairage selon la revendication 1, **caractérisé en ce que** l'optique de liaison présente l'optique d'information (10) sur sa surface externe.

8. Module d'éclairage selon la revendication 1, **caractérisé en ce que** l'optique de liaison présente l'optique d'information (10) sur sa surface interne.

9. Module d'éclairage selon la revendication 1, **caractérisé en ce que** l'optique de liaison présente l'optique d'information (10) dans son espace interne.

10. Module d'éclairage selon la revendication 1, **caractérisé en ce que** l'optique de liaison présente une forme de lentille sur sa surface externe.

11. Module d'éclairage selon la revendication 1, **caractérisé en ce que** l'optique de liaison présente sur ses côtés externes un bord (13, 13') saillant sur les guides d'ondes optiques.

12. Module d'éclairage selon la revendication 1, **caractérisé en ce que** l'optique de liaison présente des moyens de fixation sur les guides d'ondes optiques.

13. Module d'éclairage selon la revendication 12, **caractérisé en ce que** les moyens sont constitués de clips.

14. Module d'éclairage selon la revendication 1, **caractérisé en ce que** les guides d'ondes optiques présentent des moyens de fixation pour la liaison avec l'optique de liaison.
